# EUROPEAN PATENT SPECIFICATION

(11) **EP 3 874 481 B1**
(45) Date of publication and mention of the grant of the patent: **14.02.2024**
(21) Application number: 19791132.4
(22) Date of filing: 04.10.2019
(51) Int. Cl.: G08B 13/196, G08B 25/00

(54) **PERFORMANCE-GUARANTEED CHANNEL ACCESS CONTROL FOR SECURITY ALARM AND IMAGE SENSORS**
LEISTUNGSGARANTIERTE KANALZUGRIFFSSTEUERUNG FÜR SICHERHEITSALARM- UND BILDSENSOREN
COMMANDE D'ACCÈS AU CANAL À PERFORMANCE GARANTIE POUR CAPTEURS D'ALARME DE SÉCURITÉ ET CAPTEURS D'IMAGE

(30) Priority: 30.10.2018 US 201862752855 P
(43) Date of publication of application: 08.09.2021
(73) Proprietor: Carrier Corporation, Palm Beach Gardens, FL 33418 (US)
(72) Inventor: LIN, Chih-Kuang, Cork (IE); CAMPANA, Daniele, Cork (IE); TIWARI, Ankit, Hartford, Connecticut 06108 (US); RAMOUTAR, Michael, Lincolnton, North Carolina 28092 (US)
(74) Representative: Dehns
(86) International application number: PCT/US2019/054788
(87) International publication number: WO 2020/091949

(56) References cited:
- GB-A- 2 408 166
- US-A1- 2003 025 599
- US-B1- 7 835 343

## Description

The disclosure relates generally to security system based on wireless communication, and more specifically, to performance-guaranteed channel access control for security alarm and image sensors.

In general, conventional security systems utilize a light-weight wireless protocol technologies, e.g., 80Plus One-Way radio frequency protocol, to transmit their data because of the small application data payload and battery constraint. Light-weight wireless protocol technologies are narrowband with low data rate support and usually suitable for intrusion detection alarm. Yet, for an application generating larger traffic, like an image service, these light-weight wireless protocol technologies are not usable because their access control lacks transmission coordination that enables data-intensive communications. In addition, further complications exist when new devices are added to the convention security systems because these new devices must be backward compatible with existing devices using the light-weight wireless protocol technologies.
US 7 835 343 B1 discloses a building-security system with a control panel and peripherals, where data transmission between then control panel and peripherals is over a wireless network, and the transmission uses channel hopping and randomized retransmission delays to prevent data collision.
US 2003/025599 A1 discloses a method for detecting events occurring in a security system, such as movement, and sending data of the event based on location, type and priority of the event. The system is also designed to work with legacy security systems.
GB 2 408 166 A discloses a monitoring system where a media controller communicates wirelessly, via a GSM network, with remote devices regarding a sensor event, transmitting a stream of data from a sensor.

According to a first aspect there is provided a method for implementing an image data communication protocol by a panel. The panel is communicatively coupled over a wireless network to alarm sensors and image sensors. The panel requests, under the image data communication protocol, image data from the image sensor by sending an image request packet to the image sensor. The panel receives, under the image data communication protocol, image data as an image data packet from the image sensor. The method is characterized by the panel enabling channel monitoring for a channel condition of the wireless network to avoid the ongoing alarm packets colliding with any image packets and efficiently schedule image packet transmissions. If the channel monitoring indicates a busy channel, the panel delays a next image request packet until a wireless channel of the wireless network is not occupied for a time periods that corresponds to a maximum interval between retransmitted alarm packets.

The panel may iteratively request data packets from the at least one image sensor to avoid potential packet collisions.

An intrusion event may be detected by the one or more alarm sensors to initiate an alarm.

The alarm may include alarm data that sends across the wireless network to the panel.

The panel may repeat the requesting and the receiving operations to complete a next image data transmission.

The at least one image sensor may implement an adaptive wakeup boundary to provide a shorter image delivery latency and to limit extra energy costs from more frequent wakeups.

The panel may provide a guarantee legacy alarm device performance based on an accommodation of traffic characteristics of legacy devices.

Any of the above method embodiments may be implemented as a panel and/or a system.

Additional features and advantages are realized through the techniques of the present disclosure. Other embodiments and aspects of the disclosure are described in detail herein. For a better understanding of the disclosure with the advantages and the features, refer to the description and to the drawings.

The subject matter is particularly pointed out and distinctly claimed in the claims at the conclusion of the specification. The forgoing and other features, and advantages of the embodiments herein are apparent from the following detailed description taken in conjunction with the accompanying drawings in which:
FIG. 1 depicts a security system;
FIG. 2 depicts a process flow; and
FIG. 3 depicts a communication schematic.

Various embodiments of the invention are described herein with reference to the related drawings. Alternative embodiments of the invention can be devised without departing from the scope of this invention. Various connections and positional relationships (e.g., over, below, adjacent, etc.) are set forth between elements in the following description and in the drawings. These connections and/or positional relationships, unless specified otherwise, can be direct or indirect, and the present invention is not intended to be limiting in this respect. Accordingly, a coupling of entities can refer to either a direct or an indirect coupling, and a positional relationship between entities can be a direct or indirect positional relationship. Moreover, the various tasks and process steps described herein can be incorporated into a more comprehensive procedure or process having additional steps or functionality not described in detail herein.

The following definitions and abbreviations are to be used for the interpretation of the claims and the specification. As used herein, the terms "comprises," "comprising," "includes," "including," "has," "having," "contains" or "containing," or any other variation thereof, are intended to cover a non-exclusive inclusion. For example, a composition, a mixture, process, method, article, or apparatus that comprises a list of elements is not necessarily limited to only those elements but can include other elements not expressly listed or inherent to such composition, mixture, process, method, article, or apparatus.

Additionally, the term "exemplary" is used herein to mean "serving as an example, instance or illustration." Any embodiment or design described herein as "exemplary" is not necessarily to be construed as preferred or advantageous over other embodiments or designs. The terms "at least one" and "one or more" may be understood to include any integer number greater than or equal to one, i.e., one, two, three, four, etc. The terms "a plurality" may be understood to include any integer number greater than or equal to two, i.e., two, three, four, five, etc. The term "connection" may include both an indirect "connection" and a direct "connection."

The terms "about," "substantially," "approximately," and variations thereof, are intended to include the degree of error associated with measurement of the particular quantity based upon the equipment available at the time of filing the application. For example, "about" can include a range of ± 8% or 5%, or 2% of a given value.

For the sake of brevity, conventional techniques related to making and using aspects of the invention may or may not be described in detail herein. In particular, various aspects of computing systems and specific computer programs to implement the various technical features described herein are well known. Accordingly, in the interest of brevity, many conventional implementation details are only mentioned briefly herein or are omitted entirely without providing the well-known system and/or process details.

Turning now to an overview of technologies that are more specifically relevant to aspects of the invention, as discussed above, conventional security systems are unable to support applications with low and high data loads and provide backward compatibility for existing devices. For example, conventional security systems at best provide an orthogonal schedule or random access method or adapt a hybrid of time-division multiple access, carrier-sense, multiple access, and random access methods. None of these described methods, however, aim to either accommodate traffic characteristics of existing devices in the conventional security systems or dynamically adapt the channel access from the overall system perspective and channel conditions.

Turning now to an overview of the aspects of the invention, one or more embodiments of the invention address the above-described shortcomings of the prior art by providing a security system, method, and/or computer program product (collectively referred to as a security system for brevity) that supports any application with both low and high data loads and provides backward compatibility for existing devices. The security system includes an access method that guarantees a limited impact on legacy devices and new high-traffic device requirements. In accordance with one or more embodiments, the security system may assume that the legacy devices use an 80Plus One-Way radio frequency protocol method; however, the security system can be extended to all kinds of legacy systems and not only the security system described herein. Technical effects and benefits of embodiments of the security system include placing communication and computation overhead to a panel side and enhancing communication efficiency and lifetime of battery-powered devices. Technical effects and benefits of embodiments of the also security system include reduced collisions between different image sensors and guarantee legacy device performance, along with efficient sleep management for sensors to increase a sensor lifetime. Thus, embodiments described herein are necessarily rooted in a panel of a security system to perform proactive operations to overcome problems specifically arising in the realm of conventional security systems.

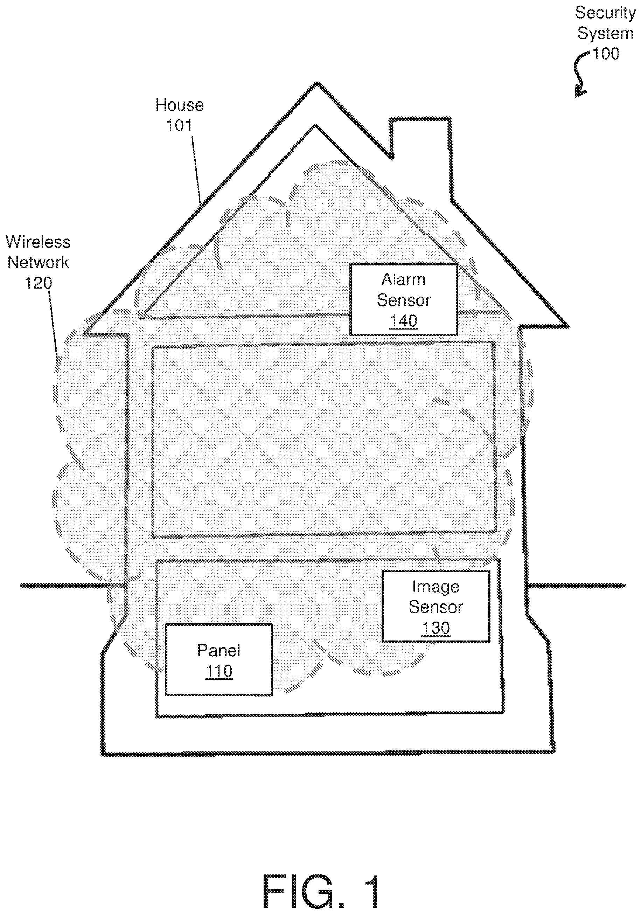

FIG. 1 depicts a security system 100 in accordance with one or more embodiments. The security system 100 is generally shown in accordance with an embodiment overlaying a house 101, like facility, building, or property. The security system 100 can be an electronic, computer framework inlcuding and/or employing any number and combination of computing devices and networks utilizing various communication technologies, as described herein. The security system 100 can be easily scalable, extensible, and modular, with the ability to change to different services or reconfigure some features independently of others. As shown, the security system 100 includes a panel 110, a wireless network 120, one or more image sensors 130, and one or more alarm sensors 140, each of which being representative of one or more of that element.

The security system 100 provides intrusion detection and monitoring services using the one or more image sensors 130 and the one or more alarm sensors 140. The one or more alarm sensors 140 detect intrusion events. Examples of the one or more alarm sensors 140 include contact sensors, motion sensors, window sensors, and audio sensors. Examples of intrusion event include the sound of glass breaking, motion, separating of contact sensors, etc. The one or more image sensors 130 capture intrusion pictures for further analysis. An example of the one or more image sensors 130 is a camera. The panel 110 is a centralized gateway that receives communications from the one or more image sensors 130 regarding the intrusion events and the one or more alarm sensors 140 regarding the pictures. The panel 110 is configured to implement channel monitoring (e.g., monitoring for the communications from the one or more image sensors 130 and the one or more alarm sensors 140), because the security system 100 can experience channel fluctuations caused by indoor radio frequency phenomenon and capture effect, which may degrade their packet reception, during wireless communications. In accordance with one or more embodiments, the security system 100 can include up to 80 alarm nodes (e.g., the alarm sensor 140) and multiple image nodes (e.g., the image sensor 130). Both of the alarm sensors 140 and image sensors 130 follow the time synchronization and wake up procedures (e.g., of the 80Plus One-Way radio frequency protocol).

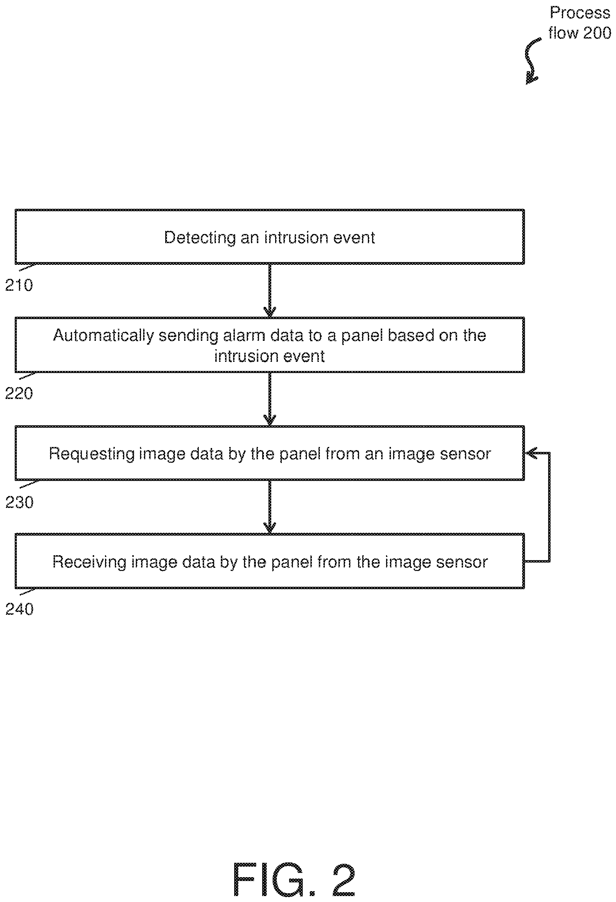

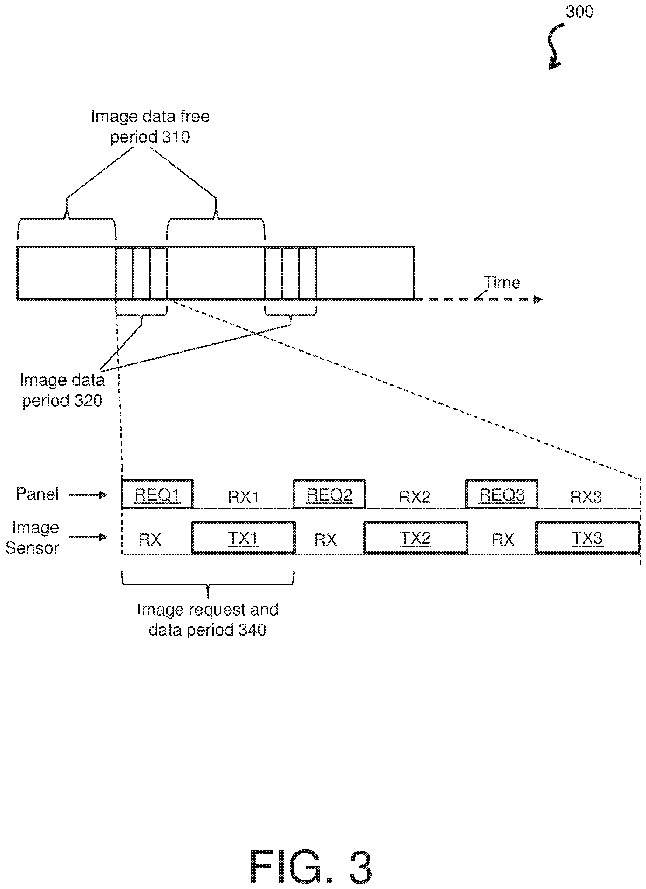

The panel 110, the one or more image sensors 130, and the one or more alarm sensors 140 each can be a computing device that includes at least a processor. The processor, also referred to as a processing circuit, microprocessor, computing unit, is coupled via a system bus to a system memory and various other components. The system memory (i.e., a tangible storage medium) includes at least one of a read only memory (ROM), a random access memory (RAM), and/or a hard disk. Software can be stored as instructions for execution on the computing device by the processor (to perform process, such as the flow of FIG. 2 and the communication schematic of FIG. 3). Data can be stored on the system memory and can include a set of values of qualitative or quantitative variables organized in various data structures to support and be used by operations of the software.

The computing device can include one or more adapters (e.g., hard disk controllers, network adapters, interface adapter, graphics adapters, etc.) that interconnect and support communications between the processor, the system memory, and other components of the security system 100. In accordance with one or more embodiments, the sensors 130 and 140 are equipped with a 433 MHz radio frequency (RF) transceivers, which enable wireless communications (over the wireless network 120) between the sensors 130 and 140 and the panel 110.

Thus, as configured in FIG. 1, the operations of the software and the data within the security system 100 are necessarily rooted in the computational ability of the processor of the computing devices (e.g., the panel 110, the one or more image sensors 130, and the one or more alarm sensors 140) to overcome and address the herein-described shortcomings of the conventional security systems. In this regard, the software and the data improve computational operations of the security system 100 by reducing collisions between different image sensors 130 and alarm sensors 140 and guaranteeing legacy device performance, along with efficient sleep management for the one or more image sensors 130 to increase a sensor lifetime. For instance, a guarantee legacy alarm device performance includes the security system 100 supporting communications with respect to an image data period (e.g., 200 ms), an image data free period (e.g., 500 ms), and an alarm free period (e.g., 500 ms) prior to a next image request. Thus, the security system 100 provides the technical effects and benefits of accommodating traffic characteristics of legacy devices and making (a best) use of panel's resources for channel monitoring.

The wireless network 120 can include copper transmission cables, optical transmission fibers, wireless transmission, routers, firewalls, switches, gateway computers and/or edge servers. Examples of the wireless network 120 include the Internet, a local area network, and/or a wide area network. The wireless network 120 can provide internal iterations of the software and the data as a platform as a service, a software as a service, and/or infrastructure as a service. The wireless network 120 supports legacy alarm nodes and for one or more alarm sensors 140 utilizing an 80Plus One-Way radio frequency protocol to transmit their data to a panel. For image data communication, the one or more image sensors 130 utilize an image data communication protocol described herein.

The image data communication protocol specifies image packet definition, device synchronization, medium access control (MAC), and sleep management for the one or more image sensors 130. In accordance with one or more embodiments, the image data communication protocol can be a guaranteed transmission method (GTM) that aims at guaranteeing the limited impacts of image data transmissions on legacy alarm packets. In accordance with one or more embodiments, the image data communication protocol can be an enhanced transmission method (ETM) that is designed to reduce both of the transmission collisions between alarm packets and image packets and the image packet latency using a best-effort approach. ETM can complement GTM in certain scenarios, which are detailed herein. In accordance with one or more embodiments, the image data communication protocol can incorporate the 80Plus One-Way radio frequency protocol. In accordance with one or more embodiments, the one or more alarm sensors 140 can include legacy alarm sensors utilizing the 80Plus One-Way radio frequency protocol. Further, the one or more image sensors 130 can include cameras utilizing the image data communication protocol and/or 80Plus One-Way radio frequency protocol.

The image data communication protocol, also, defines uplink communications from the one or more image sensors 130 to the panel 110, as well as downlink communications from the panel 110 to the one or more image sensors 130. The image data communication protocol includes a link layer access control that coordinates access between the panel 110 and the one or more image sensors 130 and a listen-before-talk (LBT) method. Technical effects and benefits of embodiments of the image data communication protocol (which expand on the technical effects and benefits of the security system 100) include preservation of physical layer specifications of the 80Plus One-Way radio frequency protocol, enhanced communication integration between image and alarm data deliveries, and preservation of existing time synchronization and device wakeup methods of 80Plus One-Way radio frequency protocol.

In accordance with one or more embodiments, the panel 110 implements the image data communication protocol by iteratively requesting data packets from the single image sensor 130 and avoiding potential packet collisions between different image sensors. The panel 110 enables channel monitoring for a channel condition to avoid the ongoing alarm packets colliding with any image packets and efficiently schedule image packet transmissions. Note that the sensors 130 and 140 do not run channel monitoring and that they can remain in sleep mode longer and save battery. With respect to the channel monitoring, if the channel monitoring indicates a busy channel (e.g., a wireless channel of the wireless network 120), the panel 110 delays a next image request packet until the channel is not occupied for a time period that corresponds to a maximum interval between retransmitted alarm packets. The maximum interval can be defined according to the 80Plus One-Way radio frequency protocol. In other words, the image packet transmission takes into account the monitored channel condition and the traffic distribution of legacy devices. The panel 110 omits the channel monitoring when the panel 110 detects a period of idle channel exceeding the traffic characteristic of legacy device or it successfully receives an image packet. To protect packets delivery of legacy device, the panel 110 coordinates a time period without any image traffic. Channel monitoring is tuned by the panel 110, when the channel condition changes. Given any image transmission failure, the sensors 130 and 140 return to sleep mode and follow the periodical wakeup schedule.

Turning now to FIG. 2, a process flow 200 is depicted in accordance with one or more embodiments. The process flow 200 illustrates image data communication protocol operations of the security system 100 that guarantee legacy service performance, ensure that not more than two legacy package transmission are lost, and support/meet requirements for new image delivery by the one or more image sensors 130. The process flow 200, more particularly, illustrates image data coordination and timing control for alarm data of the one or more alarm sensors 140 and the image data of the one or more image sensors 130, while guaranteeing legacy alarm service performance and image data legacy performance.

The process flow 200 begins at block 210, the security system 100 detects an intrusion event within a facility, such as a house 101, which initiates an alarm. For instance, one of the alarm sensors 140 can detect the intrusion event. At block 220, to implement the alarm, the security system 100 automatically sends alarm data to the 100 panel of the security system 100. For instance, the one of the alarm sensors 140 can send an alarm (e.g., alarm data) across the wireless network 120 to the panel 110. The intrusion event generates alarm data (e.g., 10 Bytes and image data 8 Kbytes for respective devices).

At block 230, the panel 110 requests image data from the image sensor 140 of the security system 100. At block 240, the panel 110 receives image data from the image sensor 140. The request and receive operations of blocks 230 and 240 can loop as shown in FIG 2, and are further described with respect to FIG. 3.

FIG. 3 depicts a communication schematic 300 in accordance with one or more embodiments. The communication schematic 300 includes panel-based listen-before-talk process that depicts the image packets delivery between the panel 110 and a single image sensor 130 in time domain.

In the panel-based listen-before-talk process, the panel 110 broadcasts a ping message for time synchronization every 60 seconds. The image sensors 130 wake up and listens to this ping message for time synchronization. The image sensors 130 maintain a periodical wakeup schedule at every 1 second boundary. If no radio frequency carrier is detected within a (short) period of time, e.g., 1 millisecond, after the image sensors 130 wakes up, it returns to sleep mode. Note that a length of RF signal detection is related to clock accuracy, propagation delay, electronic circuit, etc. As shown in FIG. 3, the panel 100 can send requests REQ1, REQ2, REQ3, which the single image sensor 130 receives RX, after image data free periods 310 and during image data periods 320. In reply, the single image sensor 130 can send image data TX1, TX2, and TX3. An image request and data period 340, within the image data period 320, is further described herein.

The panel 110 initiates image data collections when the panel receives a request from the one or more alarm sensors 140 (see also blocks 210 and 220 of FIG 2.). The image data delivery is a request and reply mechanism, where the panel 110 sends an image request packet REQ1 to the single image sensor 130 (see also block 230 of FIG 2.). The single image sensor 130 replies with an image data packet TX1 to the panel 110 after it successfully receives RX the image request packet REQ1. Note that the panel 110 receives RX1 the image data packet TX1. If there is more pending image data packet, the panel 110 repeats the procedures within the image request and data period 340 to complete the next image data transmission.

In accordance with one or more embodiments, before the panel 110 initiates or restarts a new run of image requests at a next 1 second boundary, the panel 110 maintains a minimum 500 milliseconds listening period after the last alarm packet is received or a minimum 500 milliseconds listening period with no received alarm packet. For the image data delivery, the panel 110 sets up a coordinated transmission schedule for the single image sensor 130 in a way that the schedule includes two periods: image data period 200 milliseconds and image data off period 500 milliseconds. The transmission schedule is repeated with no gap between consecutive image packets transmission if the previous exchange of image request and image data packets is successful. The image data period is configured to 200 milliseconds because that ensures that no more than two alarm packets from an alarm node can be missed. This feature is based on the minimum delay between two consecutive alarm messages 100 milliseconds from UTC 80Plus One-Way RF protocol. In every image data period, the panel 110 is responsible for limiting the total transmission duration between the panel 110 and the single image sensor 130 up to 200 milliseconds, which provide sufficient time for three successful sequences of image packets transmission given the image data packet payload 128 Bytes. Following the reception of the last requested image data fragment in the image data period, the panel 110 enters the image data off period 500 milliseconds. During this period, the panel 110 must listen for alarm messages. If no alarm packet is received during this period, the panel 110 immediately sends out a new image request to the single image sensor 130 if there is a pending data from the single image sensor 130. The length of image data off period 500 milliseconds is based on the maximum delay between two consecutive alarm messages 500 milliseconds from UTC 80Plus One-Way RF protocol.

In accordance with one or more embodiments, the security system can use of adaptive wakeup boundary on an image sensor side. For example, the single image sensor 130 assumes a fixed wakeup cycle, e.g., 1 second. This can be modified in a way that the single image sensor 130 uses the wakeup cycle, 1 second, when the single image sensor 130 is not being requested to send image data by the panel 110. If the single image sensor 130 is requested to send image data by the panel 110, the single image sensor 130 can change its wakeup cycle, e.g., from 1 second to 0.5 seconds. The technical effect and benefits, thus, include a shorter image delivery latency and limiting extra energy costs from more frequent wakeups due to the image data delivery period.

The present invention may be a system, a method, and/or a computer program product at any possible technical detail level of integration. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may include copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein includes an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which includes one or more executable instructions for implementing the specified logical function(s). In some alternative implementations, the functions noted in the blocks may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

The descriptions of the various embodiments herein have been presented for purposes of illustration, but are not intended to be exhaustive or limited to the embodiments disclosed. Many modifications and variations will be apparent to those of ordinary skill in the art without departing from the scope of the invention as defined by the claims. The terminology used herein was chosen to best explain the principles of the embodiments, the practical application or technical improvement over technologies found in the marketplace, or to enable others of ordinary skill in the art to understand the embodiments disclosed herein.

## Claims

1. A method for implementing an image data communication protocol by a panel (110) communicatively coupled over a wireless network (120) to one or more alarm sensors (140) and at least one image sensor (130), the method comprising:
requesting, by the panel (110) under the image data communication protocol, image data from the at least one image sensor (130) by sending an image request packet to the at least one image sensor (130); and
receiving, by the panel (110) under the image data communication protocol, image data as an image data packet from the at least one image sensor (130);
**characterized by**:
the panel (110) enabling channel monitoring for a channel condition of the wireless network (120) to avoid the ongoing alarm packets colliding with any image packets and efficiently schedule image packet transmissions; and
wherein if
the channel monitoring indicates a busy channel, the panel (110) delays a next image request packet until a wireless channel of the wireless network (120) is not occupied for a time period that corresponds to a maximum interval between retransmitted alarm packets.

2. The method of claim 1, wherein the panel (110) iteratively requests data packets from the at least one image sensor (130) to avoid potential packet collisions.

3. The method of claim 1, wherein an intrusion event is detected by the one or more alarm sensors (140) to initiate an alarm.

4. The method of claim 3, wherein the alarm comprises alarm data that sends across the wireless network (120) to the panel (110).

5. The method of claim 1, wherein the panel (110) repeats the requesting and the receiving operations to complete a next image data transmission.

6. The method of claim 1, wherein the at least one image sensor (130) implements an adaptive wakeup boundary to provide a shorter image delivery latency and to limit extra energy costs from more frequent wakeups.

7. The method of claim 1, wherein the panel (110) provides a guarantee legacy alarm device performance based on an accommodation of traffic characteristics of legacy devices.

8. A panel (110) for implementing an image data communication protocol, the panel (110) being communicatively coupled over a wireless network (120) to one or more alarm sensors (140) and at least one image sensor (130), the panel (110) being configured to:
request, under the image data communication protocol, image data from the at least one image sensor (130) by sending an image request packet to the at least one image sensor (130); and
receive, under the image data communication protocol, image data as an image data packet from the at least one image sensor (130);
**characterized in that**:
the panel (110) enables channel monitoring for a channel condition of the wireless network (120) to avoid the ongoing alarm packets colliding with any image packets and efficiently schedule image packet transmissions; and
wherein if
the channel monitoring indicates a busy channel, the panel (110) delays a next image request packet until the a wireless channel of the wireless network (120) is not occupied for a time period that corresponds to a maximum interval between retransmitted alarm packets.

9. The panel (110) of claim 8, wherein the panel (110) iteratively requests data packets from the at least one image sensor (130) to avoid potential packet collisions.

10. The panel (110) of claim 8, wherein an intrusion event is detected by the one or more alarm sensors (140) to trigger an alarm, and optionally the alarm comprises alarm data that sends across the wireless network (120) to the panel (110).

11. The panel (110) of claim 8, wherein the panel (110) repeats the requesting and the receiving operations to complete a next image data transmission.

12. The panel (110) of claim 8, wherein the at least one image sensor (130) implements an adaptive wakeup boundary to provide a shorter image delivery latency and to limit extra energy costs from more frequent wakeups.

13. The panel (110) of claim 8, wherein the panel (110) provides a guarantee legacy alarm device performance based on an accommodation of traffic characteristics of legacy devices.

14. A system for implementing an image data communication protocol, the system comprising:
a wireless network (120);
one or more image sensors (130);
one or more alarm sensors (140); and
a panel (110) being communicatively coupled over the wireless network (120) to the one or more alarm sensors (140) and the one or more image sensors (130),
the system being configured to:
detect, by the one or more alarm sensors (140), an intrusion event;
send alarm data across the wireless network (120) to the panel (110);
request, by the panel (110) under the image data communication protocol, image data from the one or more image sensors (130) by sending an image request packet to the one or more image sensors (130);
receive, by the panel (110) under the image data communication protocol, image data as an image data packet from the image sensor (130);
**characterized in that**:
the panel (110) enables channel monitoring for a channel condition of the wireless network (120) to avoid the ongoing alarm packets colliding with any image packets and efficiently schedules image packet transmissions; and
wherein if
the channel monitoring indicates a busy channel, the panel (110) delays a next image request packet until a wireless channel of the wireless network (120) is not occupied for a time period that corresponds to a maximum interval between retransmitted alarm packets.

15. The system of claim 14, wherein the one or more image sensors (130) implement an adaptive wakeup boundary to provide a shorter image delivery latency and to limit extra energy costs from more frequent wakeups.

## Patentansprüche

1. Verfahren zum Implementieren eines Bilddatenkommunikationsprotokolls durch ein Panel (110), das über ein Drahtlosnetz (120) kommunikationstechnisch an einen oder mehrere Alarmsensoren (140) und mindestens einen Bildsensor (130) gekoppelt ist, wobei das Verfahren umfasst:
Anfordern von Bilddaten von dem mindestens einen Bildsensor (130) durch das Panel (110) gemäß dem Bilddatenkommunikationsprotokoll durch Senden eines Bildanforderungspakets an den mindestens einen Bildsensor (130); und
Empfangen von Bilddaten als ein Bilddatenpaket von dem mindestens einen Bildsensor (130) durch das Panel (110) gemäß dem Bilddatenkommunikationsprotokoll;
**gekennzeichnet durch**:
Aktivieren von Kanalüberwachung auf einen Kanalzustand des Drahtlosnetzes (120) durch das Panel (110), um zu vermeiden, dass die laufenden Alarmpakete mit Bildpaketen kollidieren, und um Bildpaketübertragungen effizient zu planen; und
wobei, wenn die Kanalüberwachung einen belegten Kanal angibt, das Panel (110) ein nächstes Bildanforderungspaket verzögert, bis ein Drahtloskanal des Drahtlosnetzes (120) für eine Zeitspanne nicht belegt ist, die einem maximalen Intervall zwischen erneut übertragenen Alarmpaketen entspricht.

2. Verfahren nach Anspruch 1, wobei das Panel (110) iterativ Datenpakete von dem mindestens einen Bildsensor (130) anfordert, um potenzielle Paketkollisionen zu vermeiden.

3. Verfahren nach Anspruch 1, wobei ein Eindringereignis durch den einen oder die mehreren Alarmsensoren (140) erfasst wird, um einen Alarm auszulösen.

4. Verfahren nach Anspruch 3, wobei der Alarm Alarmdaten umfasst, die über das Drahtlosnetz (120) an das Panel (110) gesendet werden.

5. Verfahren nach Anspruch 1, wobei das Pandel (110) die Anforderungs- und die Empfangsvorgänge wiederholt, um eine nächste Bilddatenübertragung abzuschließen.

6. Verfahren nach Anspruch 1, wobei der mindestens eine Bildsensor (130) eine adaptive Aufweckgrenze implementiert, um eine kürzere Bildbereitstellungslatenz bereitzustellen und zusätzliche Energiekosten von häufigeren Aufweckvorgängen zu begrenzen.

7. Verfahren nach Anspruch 1, wobei das Panel (110) eine Legacy-Alarmvorrichtungsgarantieleistung basierend auf einer Anpassung an Verkehrseigenschaften von Legacy-Vorrichtungen bereitstellt.

8. Panel (110) zum Implementieren eines Bilddatenkommunikationsprotokolls, wobei das Panel (110) über ein Drahtlosnetz (120) kommunikationstechnisch an einen oder mehrere Alarmsensoren (140) und mindestens einen Bildsensor (130) gekoppelt ist, wobei das Panel (110) zu Folgendem konfiguriert ist:
Anfordern von Bilddaten von dem mindestens einen Bildsensor (130) gemäß dem Bilddatenkommunikationsprotokoll durch Senden eines Bildanforderungspakets an den mindestens einen Bildsensor (130); und
Empfangen von Bilddaten als ein Bilddatenpaket von dem mindestens einen Bildsensor (130) gemäß dem Bilddatenkommunikationsprotokoll;
**dadurch gekennzeichnet, dass**:
das Panel (110) Kanalüberwachung auf einen Kanalzustand des Drahtlosnetzes (120) aktiviert, um zu vermeiden, dass die laufenden Alarmpakete mit Bildpaketen kollidieren, und um Bildpaketübertragungen effizient zu planen; und
wobei, wenn die Kanalüberwachung einen belegten Kanal angibt, das Panel (110) ein nächstes Bildanforderungspaket verzögert, bis der ein Drahtloskanal des Drahtlosnetzes (120) für eine Zeitspanne nicht belegt ist, die einem maximalen Intervall zwischen erneut übertragenen Alarmpaketen entspricht.

9. Panel (110) nach Anspruch 8, wobei das Panel (110) iterativ Datenpakete von dem mindestens einen Bildsensor (130) anfordert, um potenzielle Paketkollisionen zu vermeiden.

10. Panel (110) nach Anspruch 8, wobei ein Eindringereignis durch den einen oder die mehreren Alarmsensoren (140) erfasst wird, um einen Alarm auszulösen, und der Alarm wahlweise Alarmdaten umfasst, die über das Drahtlosnetz (120) an das Panel (110) gesendet werden.

11. Panel (110) nach Anspruch 8, wobei das Pandel (110) die Anforderungs- und die Empfangsvorgänge wiederholt, um eine nächste Bilddatenübertragung abzuschließen.

12. Panel (110) nach Anspruch 8, wobei der mindestens eine Bildsensor (130) eine adaptive Aufweckgrenze implementiert, um eine kürzere Bildbereitstellungslatenz bereitzustellen und um zusätzliche Energiekosten von häufigeren Aufweckvorgängen zu begrenzen.

13. Panel (110) nach Anspruch 8, wobei das Panel (110) eine Legacy-Alarmvorrichtungsgarantieleistung basierend auf einer Anpassung an Verkehrseigenschaften von Legacy-Vorrichtungen bereitstellt.

14. System zum Implementieren eines Bilddatenkommunikationsprotokolls, wobei das System umfasst:
ein Drahtlosnetz (120);
einen oder mehrere Bildsensoren (130);
einen oder mehrere Alarmsensoren (140); und
ein Panel (110), das über das Drahtlosnetz (120) kommunikationstechnisch an den einen oder die mehreren Alarmsensoren (140) und den einen oder die mehreren Bildsensoren (130) gekoppelt ist,
wobei das System zu Folgendem konfiguriert ist:
Erfassen eines Eindringereignisses durch den einen oder die mehreren Alarmsensoren (140);
Senden von Alarmdaten über das Drahtlosnetz (120) an das Panel (110) ;
Anfordern von Bilddaten von dem einen oder den mehreren Bildsensoren (130) durch das Panel (110) gemäß dem Bilddatenkommunikationsprotokoll durch Senden eines Bildanforderungspakets an den einen oder die mehreren Bildsensoren (130);
Empfangen von Bilddaten als ein Bilddatenpaket von dem Bildsensor (130) durch das Panel (110) gemäß dem Bilddatenkommunikationsprotokoll;
**dadurch gekennzeichnet, dass**:
das Panel (110) Kanalüberwachung auf einen Kanalzustand des Drahtlosnetzes (120) aktiviert, um zu vermeiden, dass die laufenden Alarmpakete mit Bildpaketen kollidieren, und um Bildpaketübertragungen effizient zu planen; und
wobei, wenn die Kanalüberwachung einen belegten Kanal angibt, das Panel (110) ein nächstes Bildanforderungspaket verzögert, bis ein Drahtloskanal des Drahtlosnetzes (120) für eine Zeitspanne nicht belegt ist, die einem maximalen Intervall zwischen erneut übertragenen Alarmpaketen entspricht.

15. System nach Anspruch 14, wobei der eine oder die mehreren Bildsensoren (130) eine adaptive Aufweckgrenze implementieren, um eine kürzere Bildbereitstellungslatenz bereitzustellen und zusätzliche Energiekosten von häufigeren Aufweckvorgängen zu begrenzen.

## Revendications

1. Procédé de mise en oeuvre d'un protocole de communication de données d'image par un panneau (110) couplé en communication sur un réseau sans fil (120) à un ou plusieurs capteurs d'alarme (140) et à au moins un capteur d'image (130), le procédé comprenant :
la demande, par le panneau (110) selon le protocole de communication de données d'image, de données d'image à l'au moins un capteur d'image (130) en envoyant un paquet de demande d'image à l'au moins un capteur d'image (130) ; et
la réception, par le panneau (110), selon le protocole de communication de données d'image, de données d'image en tant que paquet de données d'image en provenance de l'au moins un capteur d'image (130) ;
**caractérisé par** :
le panneau (110) permettant la surveillance de canal pour une condition de canal du réseau sans fil (120) pour éviter que les paquets d'alarme en cours entrent en collision avec des paquets d'image quelconques et planifier efficacement des transmissions de paquets d'image ; et
dans lequel, si la surveillance de canal indique un canal occupé, le panneau (110) retarde un paquet de demande d'image suivant jusqu'à ce qu'un canal sans fil du réseau sans fil (120) ne soit pas occupé pendant une période de temps qui correspond à un intervalle maximal entre des paquets d'alarme retransmis.

2. Procédé selon la revendication 1, dans lequel le panneau (110) demande de manière itérative des paquets de données à l'au moins un capteur d'image (130) pour éviter des collisions potentielles de paquets.

3. Procédé selon la revendication 1, dans lequel un événement d'intrusion est détecté par les un ou plusieurs capteurs d'alarme (140) pour déclencher une alarme.

4. Procédé selon la revendication 3, dans lequel l'alarme comprend des données d'alarme qui sont transmises au panneau (110) à travers le réseau sans fil (120).

5. Procédé selon la revendication 1, dans lequel le panneau (110) répète les opérations de demande et de réception pour compléter une transmission de données d'image suivante.

6. Procédé selon la revendication 1, dans lequel l'au moins un capteur d'image (130) met en oeuvre une limite de réveil adaptative pour fournir une latence de distribution d'image plus courte et pour limiter les surcoûts énergétiques dus à des réveils plus fréquents.

7. Procédé selon la revendication 1, dans lequel le panneau (110) fournit une garantie de performance de dispositif d'alarme existant sur la base d'un logement de caractéristiques de trafic de dispositifs existants.

8. Panneau (110) pour la mise en oeuvre d'un protocole de communication de données d'image, le panneau (110) étant couplé en communication sur un réseau sans fil (120) à un ou plusieurs capteurs d'alarme (140) et à au moins un capteur d'image (130), le panneau (110) étant configuré pour :
demander, selon le protocole de communication de données d'image, des données d'image à l'au moins un capteur d'image (130) en envoyant un paquet de demande d'image à l'au moins un capteur d'image (130) ; et
recevoir, selon le protocole de communication de données d'image, des données d'image en tant que paquet de données d'image en provenance de l'au moins un capteur d'image (130) ;
**caractérisé en ce que** :
le panneau (110) permet la surveillance de canal pour une condition de canal du réseau sans fil (120) pour éviter que les paquets d'alarme en cours entrent en collision avec des paquets d'image quelconques et planifier efficacement des transmissions de paquets d'image ; et
dans lequel, si la surveillance de canal indique un canal occupé, le panneau (110) retarde un paquet de demande d'image suivant jusqu'à ce que le canal sans fil du réseau sans fil (120) ne soit pas occupé pendant une période de temps qui correspond à un intervalle maximal entre des paquets d'alarme retransmis.

9. Panneau (110) selon la revendication 8, dans lequel le panneau (110) demande de manière itérative des paquets de données à l'au moins un capteur d'image (130) pour éviter des collisions potentielles de paquets.

10. Panneau (110) selon la revendication 8, dans lequel un événement d'intrusion est détecté par les un ou plusieurs capteurs d'alarme (140) pour déclencher une alarme, et éventuellement l'alarme comprend des données d'alarme qui sont envoyées à travers le réseau sans fil (120) au panneau (110).

11. Panneau (110) selon la revendication 8, dans lequel le panneau (110) répète les opérations de demande et de réception pour compléter une transmission de données d'image suivante.

12. Panneau (110) selon la revendication 8, dans lequel l'au moins un capteur d'image (130) met en oeuvre une limite de réveil adaptative pour fournir une latence de distribution d'image plus courte et pour limiter les surcoûts énergétiques dus à des réveils plus fréquents.

13. Panneau (110) selon la revendication 8, dans lequel le panneau (110) fournit une garantie de performance de dispositif d'alarme existant sur la base d'un logement de caractéristiques de trafic de dispositifs existants.

14. Système de mise en oeuvre d'un protocole de communication de données d'image, le système comprenant :
un réseau sans fil (120) ;
un ou plusieurs capteurs d'image (130) ;
un ou plusieurs capteurs d'alarme (140) ; et
un panneau (110) étant couplé en communication sur le réseau sans fil (120) aux un ou plusieurs capteurs d'alarme (140) et aux un ou plusieurs capteurs d'image (130),
le système étant configuré pour :
détecter, par les un ou plusieurs capteurs d'alarme (140), un événement d'intrusion ;
envoyer des données d'alarme à travers le réseau sans fil (120) au panneau (110) ;
demander, par le panneau (110) selon le protocole de communication de données d'image, des données d'image aux un ou plusieurs capteurs d'image (130) en envoyant un paquet de demande d'image aux un ou plusieurs capteurs d'image (130) ;
recevoir, par le panneau (110), selon le protocole de communication de données d'image, des données d'image en tant que paquet de données d'image en provenance du capteur d'image (130) ;
**caractérisé en ce que** :
le panneau (110) permet la surveillance de canal pour une condition de canal du réseau sans fil (120) pour éviter que les paquets d'alarme en cours entrent en collision avec des paquets d'image quelconques et planifie efficacement des transmissions de paquets d'image ; et
dans lequel, si la surveillance de canal indique un canal occupé, le panneau (110) retarde un paquet de demande d'image suivant jusqu'à ce qu'un canal sans fil du réseau sans fil (120) ne soit pas occupé pendant une période de temps qui correspond à un intervalle maximal entre des paquets d'alarme retransmis.

15. Système selon la revendication 14, dans lequel les un ou plusieurs capteurs d'image (130) mettent en oeuvre une limite de réveil adaptative pour fournir une latence de distribution d'image plus courte et pour limiter les surcoûts énergétiques dus à des réveils plus fréquents.
